# EUROPEAN PATENT APPLICATION

(11) **EP 4 582 573 A1**
(43) Date of publication of application: **09.07.2025**
(21) Application number: 23860014.2
(22) Date of filing: 10.08.2023
(51) Int. Cl.: C22B 7/02, C22B 1/00, C22B 1/02, C22B 5/10, C22B 7/00, H01M 10/54

(54) **METHOD FOR RECOVERING VALUABLE METAL**

(30) Priority: 01.09.2022 JP 2022139331
(71) Applicant: SUMITOMO METAL MINING CO., LTD., Tokyo 105-8716 (JP)
(72) Inventor: NAGAKURA Toshihiko, Niihama-shi, Ehime 792-0002 (JP)
(74) Representative: Jones, Nicholas Andrew
(86) International application number: PCT/JP2023/029293
(87) International publication number: WO 2024/048249

(57) **Abstract**

To provide a method whereby a valuable metal can be efficiently recovered from a waste lithium-ion battery,
the present invention is a method for recovering a valuable metal from a waste lithium-ion battery, and comprises an oxidation roasting step S3 for performing oxidation roasting treatment of a raw material that includes a waste lithium-ion battery, and a reduction step S4 for reducing a resultant oxidation roasted product in the presence of carbon. The present invention is characterized in that dust in an exhaust gas that is generated in the oxidation roasting step S3 is subjected to heat treatment at no less than 600°C but less than 1000°C to perform recovery, and at least a portion of the recovered heat-treated dust is added to material to be treated in the reduction step S4. The temperature of heat treatment of the dust is preferably no less than 900°C but less than 1000°C.

## Description

### TECHNICAL FIELD

The present invention relates to a method for recovering valuable metals contained in waste lithium-ion batteries.

### BACKGROUND ART

In recent years, lithium-ion batteries have been widely used as a lightweight and high-power secondary battery. As lithium-ion batteries, those have been known, which enclose a negative electrode material having a negative electrode active material such as graphite fixed on a negative electrode current collector made of copper foil, a positive electrode material having a positive electrode active material such as lithium nickel oxide or lithium cobalt oxide fixed on a positive electrode current collector made of aluminum foil, a separator made of e.g., a porous polypropylene resin film, an electrolyte solution including an electrolyte such as lithium hexafluorophosphate (LiPF₆) and the like in an outer case made of metal such as aluminum or iron.

One of the major applications of lithium-ion batteries is hybrid electric vehicles and electric vehicles, and a large number of on-board lithium-ion batteries are expected to be discarded in the future with the life cycle of the vehicles. Many proposals have been made about reusing such used batteries and defective products formed during the production (hereinafter, referred to as "waste lithium-ion battery") as a resource, and a pyrometallurgical process including fusing the whole amount of waste batteries in a high temperature furnace has been proposed as a method for reusing waste lithium-ion batteries (see e.g. Patent Document 1).

In the method disclosed in Patent Document 1, at least a part of a heating agent and/or a reductant is replaced by waste lithium-ion batteries including any one or more of metal iron, metal aluminum or carbon and the resulting heating agent and/or reductant is added in a reduction step after a charge (copper concentrate) and a slag forming agent are put into a copper smelting furnace and roasted.

Incidentally, lithium hexafluorophosphate has been used as an electrolyte for commercially available lithium-ion batteries as described above. Lithium hexafluorophosphate has been widely used because of having high solubility in carbonates, which are frequently used as an electrolyte solution, and a high lithium ion dissociation degree, and being inexpensive. Phosphorus (P) is contained in a proportion of about 0.2 mass% or more in waste lithium-ion batteries obtained by roasting common cylindrical lithium-ion batteries, so-called 18650 batteries, and in a proportion of about 0.1 mass% or more in waste lithium-ion batteries obtained by roasting on-board square batteries. When iron outer cases in 18650 batteries and aluminum outer cases in square batteries have been removed, the amount of phosphorus contained in battery contents is further increased.

When waste lithium-ion batteries containing phosphorus are put into a high temperature environment in which alloy always exists like a copper refining furnace, phosphorus is distributed to the alloy and almost all amount of phosphorus is finally mixed in crude copper as impurities. In an electrolytic treatment of crude copper by a hydrometallurgical process, about 70% of phosphorus is distributed to an electrolyte solution, and thus there is a problem in that the concentration of phosphorus is increased in the electrolyte solution with electrolysis proceeding. In order to lower the concentration of phosphorus in an electrolyte solution, it is required to newly provide a purification step of removing phosphorus for the hydrometallurgical process. In the hydrometallurgical process, however, it is not sufficient to collect only copper, and it is not easy in technical and cost terms to add a step without affecting the recovery ratio of other elements to be recovered. Therefore, it has been demanded to effectively remove phosphorus in a pyrometallurgical process, a previous step of the hydrometallurgical process.

According to a method disclosed in Patent Document 2, for example, alloy obtained by melting waste lithium-ion battery contents after oxidative roasting and reduction is partially sulfurized to distribute phosphorus to residual alloy even when using contents containing a high concentration of phosphorus, and thus valuable metals such as copper, nickel and cobalt can be recovered as sulfides containing a low amount of phosphorus. However, when the oxidative roasting treatment is carried out around the lower limit of the temperature range provided in this method, oxidative removal of carbon (C) is insufficient in the oxidative roasting treatment due to the grade of waste lithium-ion batteries to be treated. Consequently, the separation of metal and slag is hindered in a reduction melting treatment and the recovery ratio of valuable metals can be lowered. Furthermore, impurities such as iron and phosphorus are also reduced, and thus costs to remove the impurities in subsequent steps can be increased.

In order to avoid the occurrence of such problems, the oxidative roasting treatment around the upper limit of the temperature range provided in the method described in Patent Document 2 is effective; however, thermal energy costs are increased and temperature control can be also difficult. Consequently, in some cases, an efficient roasting treatment cannot be carried out because oxidatively roasted material is sintered.

As described above, it has been difficult to obtain satisfactory results with regard to both the grade of oxidatively roasted material and the treatment efficiency of the oxidative roasting treatment in conventional techniques.

### Citation List

### Patent Document

Patent Document 1: Japanese Patent No. 5818798
Patent Document 2: Japanese Unexamined Patent Application, Publication No. 2018-197385

### DISCLOSURE OF THE INVENTION

### Problems to be Solved by the Invention

In the methods for recovering valuable metals as described above, for example, valuable metals to be recovered are contained in dust generated in the oxidative roasting treatment. Such dust has been conventionally emitted outside a furnace and discarded. The present inventors thought that valuable metals could be recovered more inexpensively by recovering valuable metals in dust which has been conventionally discarded as described above.

The present invention has been completed based on such knowledge, and an object thereof is to provide a method in which valuable metals can be efficiently recovered from waste lithium-ion batteries.

### Means for Solving the Problems

As described above, the present inventors found based on the knowledge that recovery losses are lowered by effectively utilizing dust containing valuable metals and valuable metals can be recovered more inexpensively, that particularly when recovering dust, the dust was subjected to a heat treatment at a certain temperature to obtain dust with an effectively lowered carbon content, thereby completing the present invention.
(1) The first invention of the present invention is a method for recovering valuable metals from waste lithium-ion batteries, the method comprising an oxidative roasting step of carrying out an oxidative roasting treatment on a raw material containing the waste lithium-ion batteries, and a reduction step of reducing oxidatively roasted material obtained in the presence of carbon, wherein dust in exhaust gas generated in the oxidative roasting step is subjected to a heat treatment at 600°C or higher and lower than 1000°C and is recovered, and at least part of the recovered heat-treated dust is added to material to be treated in the reduction step.
(2) The second invention of the present invention is the method for recovering valuable metals in the first invention, wherein the temperature of the heat treatment on the dust is 900°C or higher and lower than 1000°C.
(3) The third invention of the present invention is the method for recovering valuable metals in the first or second invention, wherein the carbon grade of the oxidatively roasted material obtained is less than 1.0 mass% by introducing an oxidant in an amount of 1.5 times or more the chemical equivalent of carbon in the raw material to be treated, and carrying out the oxidative roasting treatment at a treatment temperature selected in a range of 600°C or higher and 900°C or lower in the oxidative roasting step.

### Effects of the Invention

According to the present invention, it is possible to provide a method in which valuable metals can be efficiently recovered from waste lithium-ion batteries.

### BRIEF DESCRIPTION OF THE DRAWINGS

Fig. 1 is a process chart showing an example of the flow of a method for recovering valuable metals;
Fig. 2 is a graph showing results when carrying out a heat treatment on dust emitted in an oxidative roasting treatment and investigating how much the carbon grade in dust decreased by the temperature of the heat treatment; and
Fig. 3 is a graph showing how much the temperature of the heat treatment on dust affects the rate of removing carbon in the dust.

### PREFERRED MODE FOR CARRYING OUT THE INVENTION

A specific embodiment of the present invention (hereinafter referred to as "present embodiment") will now be described in detail. It should be noted that the present invention is not limited to the embodiment below and various modifications can be made without changing the gist of the present invention.

### <<1. Summary of method for recovering valuable metals>>

The method for recovering valuable metals according to the present embodiment is a method for recovering valuable metals contained in waste lithium-ion batteries containing phosphorus (P). In order to recover valuable metals from waste lithium-ion batteries, a pyrometallurgical process and a hydrometallurgical process are carried out. The method for recovering valuable metals according to the present embodiment relates to mainly the pyrometallurgical process.

The waste lithium-ion batteries (hereinafter also referred to as "waste battery") encompass used lithium-ion batteries, defective products formed in the production process of e.g. a positive electrode material forming secondary batteries, residues inside the production process, and waste material in the production process of lithium-ion batteries such as leavings. Valuable metals such as copper (Cu), nickel (Ni) and cobalt (Co) are contained in waste lithium-ion batteries.

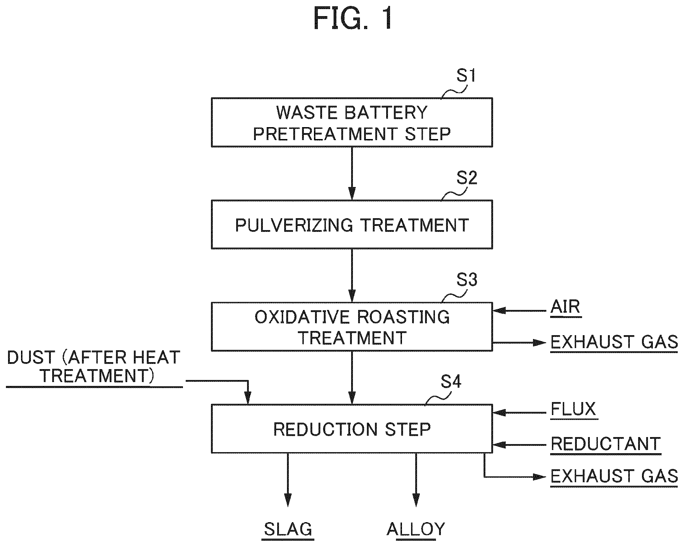

Fig. 1 is a process chart showing an example of the flow of a method for recovering valuable metals. As shown in Fig. 1, the method for recovering valuable metals according to the present embodiment comprises a waste battery pretreatment step S1 of removing electrolyte solutions and outer cases in waste lithium-ion batteries, a pulverizing step S2 of obtaining ground material by pulverizing battery contents, an oxidative roasting step S3 of carrying out oxidative roasting of the ground material, and a reduction step S4 of reducing the oxidatively roasted material to alloy valuable metals.

In particular, the method according to the present embodiment is characterized in that dust in exhaust gas generated in the oxidative roasting step S3 is subjected to a heat treatment at a certain temperature and recovered, at least part of the recovered heat-treated dust is added to material to be treated in the reduction step S4, and the treatment is carried out.

According to such method, the recovery losses of valuable metals contained in waste lithium-ion batteries are lowered, and valuable metal can be recovered more inexpensively by an efficient operation.

It should be noted that the hydrometallurgical process is carried out on alloy containing valuable metals obtained after the pyrometallurgical process to remove impurity components, and valuable metals such as copper, nickel and cobalt can be separated and purified to recover each metal. As a treatment in the hydrometallurgical process, known methods such as a neutralization treatment or a solvent extraction treatment can be carried out. As an example, in the case of alloy including copper, nickel and cobalt, valuable metals are leached with an acid such as sulfuric acid (leaching step), and then copper, for example, is extracted by e.g. solvent extraction (extraction step). A solution containing residual nickel and cobalt is used for a step of producing a positive electrode active material in a battery production process.

### <<2. Each step of recovery method>>

Each step in the method for recovering valuable metals according to the present embodiment will now be described in detail.

### [Waste battery pretreatment step]

The waste battery pretreatment step S1 is carried out for the purpose of, for example, preventing waste lithium-ion battery explosion or detoxifying the batteries, and removing outer cases. That is, waste lithium-ion batteries are in the form of a closed system, and have e.g. an electrolyte solution in the interior thereof. Therefore, when the batteries are directly ground, there is a risk of explosion, which is dangerous. Because of this, it is required to carry out an electric discharge treatment and a treatment for removing an electrolyte solution by any method. The outer cases frequently include a metal such as aluminum (Al) or iron (Fe), and such metal outer cases can be directly recovered as valuable metals in a relatively easy way. As described above, safety is increased and also the recovery and productivity of valuable metals such as copper, nickel and cobalt can be raised by removing electrolyte solutions and outer cases in the waste battery pretreatment step S1.

A specific treating method in the waste battery pretreatment step S1 is not particularly limited, and, for example, a hole can be physically made on waste batteries with a needle-shaped edge to flow out and remove electrolyte solutions in the interior thereof. Waste batteries can be also detoxified by directly heating the batteries to burn the electrolyte solutions.

When aluminum and iron contained in outer cases, which form waste batteries, are recovered, the outer cases can be ground and then screened using a sieve shaker. Aluminum is easily formed into powder even by gentle pulverizing and can be efficiently recovered. Iron contained in the outer cases can be recovered by magnetic screening.

### [Pulverizing step]

In the pulverizing step S2, the waste battery contents are ground to obtain ground material. The treatment in the pulverizing step S2 is carried out for the purpose of increasing reaction efficiency in the pyrometallurgical process. The recovery ratio of valuable metals, copper, nickel and cobalt, can be increased by increasing the reaction efficiency.

A specific pulverizing method in the treatment in the pulverizing step S2 is not particularly limited, and a conventionally known pulverizer such as a cutter mixer can be used for the pulverizing.

### [Oxidative roasting step]

### (Regarding Oxidative roasting step)

In the oxidative roasting step S3, the ground material is subjected to oxidative roasting to obtain oxidatively roasted material. In the oxidative roasting step S3, the treatment is carried out at an oxidation degree in which carbon (C) contained in waste battery contents can be oxidized and removed and also at least aluminum contained in the ground material can be oxidized. It should be noted that in general, main elements forming waste lithium-ion batteries are easily oxidized in the order of aluminum (Al) > lithium (Li) > carbon (C) > manganese (Mn) > phosphorus (P) > iron (Fe) > cobalt (Co) > nickel (Ni) > copper (Cu) due to differences in affinities for oxygen.

As described above, carbon contained in waste battery contents can be removed by oxidative roasting of the ground material in the oxidative roasting step S3. Consequently, molten fine particles of reduced valuable metals locally occurring in the subsequent reduction step S4 can cohere without physical obstacles by carbon, and can be recovered as integrated alloy. In the reduction step S4, phosphorus contained in waste battery contents is prevented from being reduced by carbon, and phosphorus can be effectively oxidized and removed, and thus prevented from being distributed to alloy of valuable metals.

That is, the amount of carbon contained in the oxidatively roasted material obtained is less than 1.0 mass% in the oxidative roasting step S3. As described above, by removing carbon so that the amount of carbon contained is almost 0 mass%, phosphorus can be effectively oxidized and removed, and also it is easy to adjust the amount of carbon to efficiently reduce and alloy valuable metals in the subsequent reduction step S4.

Assuming that the oxidative roasting treatment is not carried out, that is, when the ground material of waste battery contents is directly put into a furnace and subjected to a reduction melting treatment, carbon contained in waste batteries hinders the separation of metal and slag generated by the reduction melting treatment, and consequently the recovery ratio of valuable metals is lowered (or slag cannot be sufficiently removed). Even if oxidation is also carried out in the reduction melting treatment, it is difficult to more strictly adjust the oxidation degree, and the recovery ratio of valuable metals is lowered also in this respect. In addition, when carbon is insufficiently removed in the oxidative roasting treatment and carbon remains in an amount of not less than the chemical equivalent of nickel, cobalt and copper, impurities such as iron and phosphorus contained in the ground material are also reduced, and costs to remove impurities in the hydrometallurgical process will be increased.

In the method according to the present embodiment, an oxidant is preferably introduced in an amount of 1.5 times or more the chemical equivalent of carbon (the amount required to oxidize carbon) in the raw material containing waste lithium-ion batteries in the oxidative roasting treatment. In addition, the amount of oxidant introduced is more preferably 2.0 times or more and 3.0 times or less the chemical equivalent of carbon in the raw material. The oxidant is not particularly limited, and air is preferably used from the viewpoint of easy handling and for the purpose of cooling surplus oxidation heat.

As described above, by introducing an oxidant in the above-described conditions, the oxidative roasting treatment can be completed in a shorter time and moreover carbon to be oxidized contained in waste lithium-ion batteries can be easily oxidized and removed.

Furthermore, it is preferred to introduce an oxidant in the above-described conditions and also carry out the oxidative roasting treatment at a treatment temperature of 600°C or higher and 900°C or lower in the oxidative roasting treatment. Because of this, the oxidative roasting treatment can be efficiently and effectively completed in a shorter time than in conventional treatments, and moreover carbon in the raw material can be easily oxidized and removed without setting the treatment temperature to a high temperature unlike conventional treatments.

That is, carbon contained in waste lithium-ion batteries can be effectively oxidized and removed in the treatment in a shorter time than in conventional treatments by introducing an oxidant in the above-described conditions and setting the temperature conditions of the oxidative roasting treatment to 600°C or higher. Furthermore, when the temperature conditions of oxidative roasting temperature are set to 900°C or lower, thermal energy costs can be kept low, and also the temperature can be easily controlled. As described above, when the oxidative roasting treatment is carried out at a treatment temperature of 600°C or higher and 900°C or lower, the efficiency of the oxidative roasting treatment can be increased compared to that in conventional treatments.

Furthermore, in a case where the oxidative roasting treatment is carried out using e.g. a known rotary kiln, accretions on the inner wall of the kiln can be prevented and the oxidative roasting treatment can be stably and uniformly carried out by controlling the oxidative roasting temperature to 900°C or lower.

In the method according to the present embodiment, it is preferred to set the treatment time of the oxidative roasting treatment so that the carbon grade (the amount of carbon contained) of the oxidatively roasted material obtained will be less than 1.0 mass%. Herein, a test is carried out to obtain a relationship among, in the oxidative roasting treatment, the treatment time, the treatment temperature, the amount of oxidant introduced and the amount of carbon contained in the oxidatively roasted material obtained, and a specific treatment time can be set based on the test results. When the treatment time of the oxidative roasting treatment is set to two hours or longer, for example, the carbon grade in the oxidatively roasted material obtained is easily less than 1.0 mass%. Furthermore, when the treatment time is set to shorter than 3 hours, the oxidative roasting treatment for a longer treatment time than required is prevented, and thus treatment efficiency can be further increased.

About the treatment temperature of the oxidative roasting treatment, in a case where the treatment temperature is lower than 600°C, even when an oxidant is introduced in the above-described conditions, carbon is not decomposed and easily remains, and moreover aluminum oxidization remains only the surface thereof, and aluminum is easily diffused into alloy in the subsequent reduction step S4. In addition, phosphorus is generally contained in residual carbon, and thus phosphorus, which is relatively easily reduced, is reduced to a non-negligible extent by carbon when the amount of residual carbon is high. Phosphorus can be distributed to alloy in the subsequent reduction step S4, which is not preferred. Then, phosphorus cannot be effectively removed in this set of steps, and thus it is required to separately remove phosphorus from the alloy in a dephosphorization step after recovering the alloy. In addition, when the temperature conditions of the oxidative roasting treatment are lower than 600°C, oxidation removal of carbon requires a longer time, and thus the treatment time becomes too long, and there is concern about encountering obstacles to operations.

On the other hand, when the treatment temperature of the oxidative roasting treatment is higher than 900°C, the oxidatively roasted material is easily sintered, and there can exist obstacles to handling a treatment in the subsequent reduction step S4. In addition, when e.g. a known rotary kiln is used for the oxidative roasting treatment, roasted material may stick on a refractory in a furnace and be grown, which can cause blockage in the furnace, and thus treatment efficiency is easily lowered in the reduction step S4. Furthermore, in order to maintain the temperature, costs to produce a furnace body, and thermal energy costs become extremely high, and an efficient treatment cannot be carried out.

In addition, the oxidative roasting treatment can be carried out using, for example, a known roasting furnace. It is also preferred to provide a furnace (preliminary furnace) different from a melting furnace used in the reduction melting treatment in the reduction step S4, and to carry out the treatment in the preliminary furnace. Every type of kiln, which can roast the ground material and simultaneously carry out an oxidization treatment in the interior thereof by supplying oxygen, can be used as the roasting furnace. As an example, a rotary kiln, a tunnel kiln (hearth furnace) and the like which are conventionally known can be suitably used.

As described above, carbon contained in waste lithium-ion batteries can be efficiently and effectively oxidized and removed preferably by the oxidative roasting treatment in the above-described conditions. Consequently, phosphorus as impurities, can be removed and valuable metals can be recovered inexpensively and effectively. It should be noted that phosphorus can be effectively removed, and thus a hydrometallurgical process after a pyrometallurgical process in the recovery of valuable metals can be simplified. Specifically, the amount treated in the hydrometallurgical process can be decreased to about 1/4 to 1/3 the amount of waste lithium-ion batteries put into the pyrometallurgical process in a mass ratio, and the hydrometallurgical process can be simplified. Therefore, when the pyrometallurgical process (waste battery pretreatment step S1 to reduction step S4) is considered as a pretreatment in a broad sense, alloy having a small amount of impurities (phosphorus) is obtained, and also the amount of treatment is also largely decreased, and thus the pyrometallurgical process and the hydrometallurgical process can be industrially combined.

### (Recovery of dust in exhaust gas)

In the method according to the present embodiment, dust in exhaust gas generated after the treatment in the oxidative roasting step S3 is subjected to the heat treatment at a temperature of 600°C or higher and lower than 1000°C, and the heat-treated dust is recovered. Although the details will be described below, the method is characterized in that at least part of or all the recovered heat-treated dust is added to material to be treated (oxidatively roasted material) in the reduction step S4 and the reduction treatment is carried out.

Dust is contained in exhaust gas emitted in the oxidative roasting treatment and has been conventionally discarded. However, a slight amount of valuable metals is contained in the dust in exhaust gas, and the recovery losses of valuable metals have been caused by discard. Because of this, the recovery losses of valuable metals can be kept low by recovering dust in exhaust gas, adding it to material to be treated in the reduction step, a subsequent step, and carrying out the reduction treatment on it with the material to be treated.

At this time, a large amount of carbon is contained in dust in exhaust gas in addition to valuable metals, and thus by directly adding the recovered dust to the material to be treated in the reduction treatment, a large amount of carbon is contained in the material to be treated, which is not preferred. Therefore, in the method according to the present embodiment, dust in exhaust gas generated after the oxidative roasting treatment is subjected to the heat treatment, and the heat-treated dust is recovered and added to the material to be treated in the reduction step S4. As described above, carbon in dust can be oxidized and removed and thus decreased, and carbon can be prevented from being contained in the material to be treated to which the dust is added, by carrying out the heat treatment on dust in exhaust gas at a certain temperature, and adding the heat-treated dust to the material to be treated in the reduction treatment.

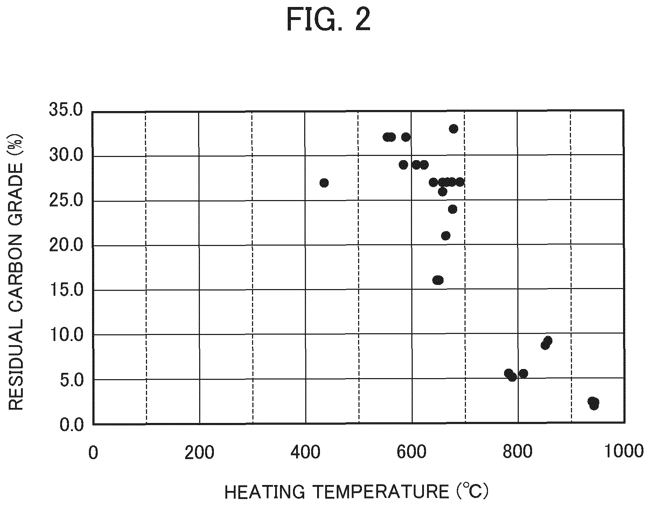

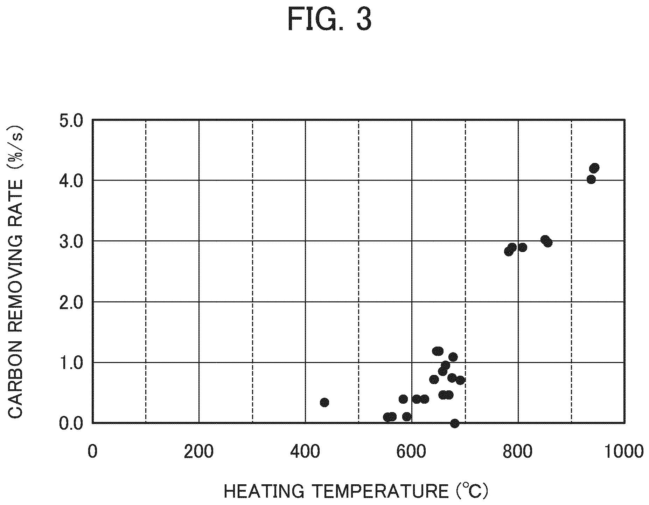

Fig. 2 is a graph showing results when carrying out the heat treatment on dust in exhaust gas emitted in the oxidative roasting treatment and investigating how much the carbon grade in dust decreased by the temperature of the heat treatment. Fig. 3 is a graph showing how much the temperature of the heat treatment on dust affects the rate of removing carbon in the dust.

It should be noted that the oxidative roasting treatment was carried out on ground material obtained by pulverizing waste lithium-ion battery contents using a rotary kiln equipped in the atmosphere in conditions of a treatment temperature of 900°C and a treatment time of two hours. Table 1 below shows the composition of dust (dust used for investigations in Figs. 2 and 3) in exhaust gas emitted in the oxidative roasting treatment.

**[Table 1]**

| (mass%) | Ni | Cu | Al | C |
|---|---|---|---|---|
| Dust | 17 | 1.8 | 2.8 | 32 |

With reference to Fig. 2, it is revealed that the carbon grade in dust starts to decrease in a range in which the temperature of the heat treatment of dust is 600°C or higher and lower than 1000°C. With reference to Fig. 3, it is revealed that the rate of removing carbon in dust increases in the same temperature range as above. That is, it is found that the carbon grade in dust emitted in the oxidative roasting treatment can be effectively decreased by the heat treatment on the dust at a temperature of 600°C or higher and lower than 1000°C.

It is also found that the effect of decreasing the carbon grade in dust and the effect of increasing the carbon grade decrease rate can be maximized at a heat treatment temperature of 900°C or higher.

As described above, dust in exhaust gas emitted in the oxidative roasting treatment can be subjected to the heat treatment at a temperature of 600°C or higher and lower than 100°C, preferably 900°C or higher and lower than 1000°C to oxidize and effectively decrease carbon in dust.

A specific method for the heat treatment of dust is not particularly limited. The treatment can be carried out, for example, by placing a burner at an exhaust gas duct in equipment for the oxidative roasting treatment. In addition to this, the treatment can be carried out using a conventionally known combustion tower.

### [Reduction step]

In the reduction step S4, the oxidatively roasted material obtained in the oxidative roasting step S3 is reduced to obtain reduced material. An object of the reduction step S4 is to retain unnecessary oxides such as aluminum oxidized by the oxidative roasting treatment as oxides, reduce and melt oxides of valuable metals such as copper, which have been oxidized by the oxidative roasting treatment, and recover reduced material as integrated alloy.

Herein, in the reduction step S4, the reduction melting treatment is carried out at least in the presence of carbon. Molten material containing slag and alloy containing valuable metals is obtained by such reduction melting treatment.

Carbon is a reductant, which easily reduces valuable metals to be recovered such as copper, nickel and cobalt. Examples thereof include graphite, which can reduce 2 mol of valuable metal oxides such as copper oxide and nickel oxide by 1 mol of carbon, and the like. In addition, e.g. hydrocarbons which can reduce 2 to 4 mol per mol of carbon can be used as a carbon resource. As described above, valuable metals are efficiently reduced by the reduction melting treatment in the presence of carbon as a reductant, and thus alloy containing valuable metals can be more effectively obtained. In addition, reduction using carbon also has an advantage of extremely high safety compared to, for example, when utilizing thermite reaction, in which reduction proceeds using metal powder of e.g. aluminum as a reductant.

In addition to artificial graphite and natural graphite, e.g. coal and coke can be also used as carbon, a reductant, as long as the degree of impurities is acceptable in products and subsequent steps. It should be noted that ammonia and carbon monoxide may be added in the reduction melting treatment.

At this time, the carbon abundance is preferably adjusted to a moderate value. In a case where the carbon abundance is too high, when phosphorus is contained in the oxidatively roasted material, much of phosphorus is reduced by the carbon, distributed to alloy containing valuable metals such as copper, nickel and cobalt, and cannot be effectively removed, and thus alloy with a high phosphorus grade is obtained. On the other hand, in a case where the carbon abundance is too low, phosphorus is effectively removed and then alloy with a low phosphorus grade is obtained; however, valuable metals are not effectively reduced, and thus the recovery ratio of valuable metals is lowered. It should be noted that the carbon abundance can be increased and decreased considering **e.g.** the amount of phosphorus remaining in the oxidatively roasted material, and also differences between the costs of carbon (carbon resource) used as a reductant and the costs of valuable metals to be recovered (cost differences).

Specifically, the reduction melting treatment in the reduction step S4 is carried out in the presence of carbon in an amount of preferably above 7.5 mass% and 10 mass% or less and more preferably 8.0 mass% or more and 9.0 mass% or less with respect to 100 mass% of the oxidatively roasted material to be treated. By controlling the carbon abundance as described above, valuable metals are effectively reduced to improve the recovery ratio, whereas phosphorus reduction can be prevented and also phosphorus can be effectively separated to obtain alloy with a low phosphorus grade.

The carbon abundance can be adjusted by adding **e.g.** graphite in the reduction melting treatment as described above. Strictly speaking, it is preferred to make adjustment including the amount of carbon, which has not been oxidized and removed by the oxidative roasting treatment in the oxidative roasting step S3. That is, the carbon abundance includes not only the amount of carbon added in the reduction melting treatment, but also the amount of carbon remaining in the oxidatively roasted material. However, because a certain amount of oxidant is introduced and the oxidative roasting treatment is also carried out in specific temperature range conditions in the oxidative roasting step S3 as described above, carbon contained in the raw material is effectively removed, and carbon is hardly contained in the oxidatively roasted material obtained. Because of this, about the amount of carbon in the reduction melting treatment, the amount of carbon added is substantially considered the abundance thereof, which can be freely adjusted by carbon added.

In the method according to the present embodiment, dust in exhaust gas generated after the treatment in the oxidative roasting step S3 is subjected to the heat treatment at a temperature of 600°C or higher and lower than 1000°C, and the heat-treated dust is recovered as described above. The method is characterized in that at least part of or all the recovered heat-treated dust is added to the material to be treated in the reduction step S4 (oxidatively roasted material) and the reduction treatment is carried out.

As described above, the recovery losses of valuable metals can be decreased by recovering dust in exhaust gas generated in the oxidative roasting step S3, adding it to the material to be treated in the reduction melting treatment, and carrying out the treatment together, and a more efficient recovery treatment can be carried out.

As described above, dust recovered from exhaust gas and added to material to be treated in the reduction melting treatment is previously subjected to the heat treatment at a temperature of 600°C or higher and lower than 1000°C, preferably 900°C or higher and lower than 1000°C. Therefore, carbon is effectively decreased in the dust. However, carbon can partially remain also in heat-treated dust, and the carbon acts as a reductant in the reduction treatment. Because of this, the carbon abundance in the reduction melting treatment is adjusted considering the amount of carbon remaining in dust which has been subjected to the heat treatment.

Herein, a case is thought where dust in exhaust gas emitted in the oxidative roasting step S3 is added to oxidatively roasted material as material to be treated directly, that is, dust is not subjected to the heat treatment. In this case, carbon is contained in a high concentration in dust which has not been subjected to the heat treatment, and thus using the dust has limitations even when carbon in dust is preferentially used as a reductant. That is, the amount of reductant used in the reduction melting treatment is required to be adjusted to an amount in which valuable metals (such as Ni, Co and Cu) contained in the material to be treated can be melted and reduced, and alloyed and in which impurities (such as P, Fe, Mn and Al) are not reduced, and thus using dust, which has not been subjected to the heat treatment and contains carbon in a high concentration, naturally has limitations.

Contrarily, in a case where heat-treated dust, which is obtained by the heat treatment on dust, is added to material to be treated (oxidatively roasted material), carbon in dust is reduced by the heat treatment, and thus more dust can be added to the material to be treated than in the above-described case (case where dust which has not been subjected to the heat treatment is added to material to be treated).

That is, in the method according to the present embodiment, more dust containing valuable metals can be introduced into the reduction melting treatment than in conventional methods in which dust is discarded, and also than in a case where dust is simply introduced into the reduction melting treatment (dust is directly introduced without the heat treatment), the recovery losses of valuable metals can be more effectively decreased, and an efficient recovery of valuable metals can be achieved.

The temperature conditions in the reduction melting treatment (melting temperature) are not particularly limited, and are preferably 1320°C or higher and 1600°C or lower and more preferably 1450°C or higher and 1550°C or lower. For example, the melting point is generally 1380°C or higher for copper alloys containing 50 mass% or more of cobalt, and the melting point is generally 1320°C or higher for copper alloys containing 50 mass% or more of nickel. Therefore, valuable metals such as copper, nickel and cobalt are easily recovered as alloy by reduction-melting at a temperature of 1320°C or higher. In addition, the fluidity of the alloy obtained becomes very good, and the separation efficiency between impurity components and valuable metals is improved by reduction-melting at a temperature of 1450°C or higher, which is more preferred. On the other hand, when the melting temperature is higher than 1600°C, thermal energy is consumed in a wasteful way, and consumption of refractories such as crucibles and furnace walls becomes severe, and thus productivity can be lowered. Therefore, the melting temperature is preferably 1600°C or lower.

In the reduction melting treatment, a flux is preferably used. Slag containing oxides of e.g. aluminum can be dissolved in a flux and removed by reduction-melting using the flux.

A flux containing calcium (Ca) as a main component is preferred. Calcium oxide and calcium carbonate, for example, can be used. Phosphorus is oxidized to form an acid oxide, and thus as the composition of slag becomes basic, phosphorus is easily distributed to the slag and removed. Therefore, it is preferred that the amount of calcium, which forms a basic oxide in slag, be higher and the amount of silicon (Si), which forms an acid oxide, be smaller. In particular, a flux is preferably added for the treatment so that the mass ratio of silicon dioxide (SiO₂)/calcium oxide (CaO) in slag generated will be 0.5 or less. In addition, when the proportion of aluminum oxide (Al₂O₃) is high, the melting point of slag is increased, and thus a sufficient amount of calcium is required to melt aluminum oxide. In particular, a flux is preferably added for the treatment so that the mass ratio of calcium oxide (CaO)/aluminum oxide (Al₂O₃) in slag will be 0.3 or more and 2.0 or less. Because of this, the slag becomes basic and phosphorus which forms an acid oxide can be effectively removed.

In the reduction melting treatment, dust and exhaust gas, for example, can be generated; however, they can be detoxified by a conventionally known treatment for exhaust gas.

In addition, sulfur can be added to alloy obtained after the reduction melting treatment in the reduction step S4 before recovering the alloy, thereby being able to make the alloy fragile and easily crush the alloy. The specific surface area can be increased by crushing the alloy, and thus leaching properties in the hydrometallurgical process can be improved.

It should be noted that a method in which the oxidatively roasted material obtained after the oxidative roasting step S3 is reduced and melted to recover reduced material as integrated alloy has been described above; however, it is not essential to carry out reduction and melting at the same time and the steps can be also carried out independently.

Specifically, first, the oxidatively roasted material obtained by the oxidative roasting step S3 is reduced as a reduction step to obtain reduced material. In this reduction step, unnecessary oxides such as aluminum oxidized in the oxidative roasting treatment are retained as oxides, oxides of valuable metals such as copper, which have been oxidized by the oxidative roasting treatment, are reduced, and reduced material is recovered as integrated alloy in the subsequent melting step.

In the reduction step, the oxidatively roasted material is heated and reduced at a temperature of, for example, 500°C or higher and 1000°C or lower (reduction temperature) and also in the presence of carbon. The reduction temperature is not particularly limited; however, when the temperature is 500°C or higher and 1000°C or lower, the time for reduction can be shortened, and also thermal energy costs can be kept low, and thus the reduction treatment efficiency can be increased. It should be noted that when the reduction temperature is lower than 500°C, the reduction reaction efficiency is lowered, and thus the treatment requires a longer time. On the other hand, when the reduction temperature is higher than 1000°C, sintering easily occurs before reducing the oxidatively roasted material.

The reduction treatment can be carried out using a reduction furnace, and the interior of the reduction furnace is heated to a desired temperature using e.g. a burner to heat and reduce the oxidatively roasted material charged into the furnace.

Next, the reduced material obtained after the reduction step is melted and alloyed in the melting step. As described above, the reduced material is melted to obtain molten material containing slag containing oxides of e.g. aluminum, and alloy containing valuable metals such as copper, nickel and cobalt.

In the melting step, the temperature conditions in the melting treatment (melting temperature) are not particularly limited, and are preferably 1320°C or higher and 1600°C or lower. In addition, a flux such as calcium oxide or calcium carbonate is preferably used in the melting treatment. It should be noted that dust and exhaust gas, for example, can be generated in the melting treatment; however, they can be detoxified by a conventionally known treatment for exhaust gas.

## Claims

1. A method for recovering valuable metals from waste lithium-ion batteries, the method comprising,
an oxidative roasting step of carrying out an oxidative roasting treatment on a raw material containing the waste lithium-ion batteries, and
a reduction step of reducing oxidatively roasted material obtained in presence of carbon,
dust in exhaust gas generated in the oxidative roasting step being subjected to a heat treatment at 600°C or higher and lower than 1000°C and being recovered, and at least part of the recovered heat-treated dust being added to material to be treated in the reduction step.

2. The method for recovering valuable metals according to claim 1,
wherein a temperature of the heat treatment on the dust is 900°C or higher and lower than 1000°C.

3. The method for recovering valuable metals according to claim 1 or 2,
wherein a carbon grade of the oxidatively roasted material obtained is less than 1.0 mass% by introducing an oxidant in an amount of 1.5 times or more chemical equivalent of carbon in the raw material to be treated, and carrying out the oxidative roasting treatment at a treatment temperature selected in a range of 600°C or higher and 900°C or lower in the oxidative roasting step.
